Europäisches Patentamt

European Patent Office

Office européen des brevets

(11) Veröffentlichungsnummer: **0 180 924**
A2

## (12) EUROPÄISCHE PATENTANMELDUNG

(21) Anmeldenummer: 85113899.0

(22) Anmeldetag: 31.10.85

(51) Int. Cl.⁴: **C 04 B 35/65**
C 04 B 35/00, C 04 B 37/00

(30) Priorität: 05.11.84 DE 3440346

(43) Veröffentlichungstag der Anmeldung:
14.05.86 Patentblatt 86/20

(84) Benannte Vertragsstaaten:
AT BE CH DE FR GB IT LI NL SE

(71) Anmelder: HELIOTRONIC Forschungs- und
Entwicklungsgesellschaft für Solarzellen-Grundstoffe
mbH
Johannes-Hess-Strasse 24
D-8263 Burghausen(DE)

(72) Erfinder: Dietl, Josef, Dr. Dipl.-Phys.
Am Bärenbach 17
D-8262 Neuötting(DE)

(72) Erfinder: Sirtl, Erhard, Prof. Dr. Dipl.-Chem.
Kiefernweg 11
D-8261 Markti/Inn(DE)

(72) Erfinder: Seifert, Dieter, Dr. Dipl.-Ing.
Siedlungsstrasse 12
D-8265 Neuötting(DE)

(72) Erfinder: Baueregger, Rolf
Spitzsteinstrasse 19
D-8269 Burgkirchen(DE)

(72) Erfinder: Bildl, Erich
Holzöster 46
A-5131 Franking(AT)

(54) Werkstoff aus in Gegenwart von Kohlenstoff reaktiongebundenen, elementares Silicium enthaltenden Partikeln und Verfahren zu seiner Herstellung.

(57) Es wird ein Werkstoff aus in Gegenwart von Kohlenstoff reaktionsgebundenen, elementares Silicium enthaltenden Partikeln angegeben, der dadurch erhältlich ist, daß die Partikel, gegebenenfalls unter Zusatz von Füllstoffen im Gemisch mit Kohlenstoff und/oder carbonisierbaren Substanzen nach einem Formgebungsschritt in oxidierender oder inerter Atmosphäre auf 1000–1400°C erhitzt werden. Der Kohlenstoffgehalt der Ausgangsmischung sowie die Aufheiz- und Verweilzeit werden so abgestimmt, daß im Endprodukt ein Kohlenstoffanteil von bis zu 2 Gew.-%, bezogen auf vorgelegtes Silicium, gebunden wird. Der Werkstoff kann, insbesondere nach weiterer formgebender Bearbeitung und/oder Oberflächenbeschichtung, in vielen Fällen anstelle von polykristallinem oder Sintersilicium eingesetzt werden.

EP 0 180 924 A2

0180924

HELIOTRONIC
Forschungs- und Entwicklungsgesellschaft für Solarzellen-
Grundstoffe mbH

München, den 27.09.1984
PAT/Dr.K/hu
Ht 8303

Werkstoff aus in Gegenwart von Kohlenstoff reaktionsgebundenen,
elementares Silicium enthaltenden Partikeln und Verfahren zu
seiner Herstellung.

Die Erfindung betrifft einen Werkstoff aus in Gegenwart von
Kohlenstoff reaktionsgebundenen, elementares Silicium enthaltenden Partikeln sowie Verfahren zu seiner Herstellung.

An die in der Halbleitertechnologie beispielsweise für
Reaktionsräume oder Schmelztiegel eingesetzten Werkstoffe
werden höchste Anforderungen in bezug auf Reinheit, mechanische Stabilität, Temperaturfestigkeit, Gasdichtigkeit
und ähnliche Eigenschaften gestellt. Die gebräuchlichen
Werkstoffe wie z. B. polykristallines Silicium, Quarz oder
Siliziumcarbid sind jedoch dementsprechend teuer.

Bei dem demgegenüber erheblich preiswerteren, neuartigen
Werkstoff auf Siliciumbasis gemäß DE-OS 32 36 276 werden
Siliciumpulver durch Reaktionsbindung in Anwesenheit
von Silicium ätzenden Agentien über Sauerstoff aneinander
gebunden. Dieser an sich äußerst vielseitige Werkstoff
kann damit aber in den Fällen nicht eingesetzt werden, wo
die Gegenwart von Sauerstoff ganz oder weitestgehend ausgeschlossen werden muß. Überdies ist dieser Werkstoff in
seiner chemischen Stabilität eingeschränkt, da die Reaktionsbindung durch manche Säuren oder Laugen wieder gelöst
werden kann.

Aus der japanischen Anmeldung J 52-103 408, Anmelder Toyo
Spinning K. K., offengelegt 30. August 1977, ist bekannt,
aus elementarem Silicium Siliciumcarbid enthaltende Formkörper herzustellen, indem aus elementarem Silicium mit
durchschnittlichem Teilchendurchmesser von weniger als 50 µm
und einem Polyacrylnitrilpolymer hergestellte Formkörper
zunächst in oxidierender Atmosphäre auf 200 - 400°C, und
dann in inerter Atmosphäre auf 900 - 2500°C erhitzt werden.
Dieses Verfahren ist jedoch wegen des erforderlichen Wechsels
der Arbeitsatmosphäre aufwendig und eignet sich hauptsächlich für die Herstellung von mit Siliciumcarbid verstärkten
Fasern oder Filmen. Der verhältnismäßig hohe Siliciumcarbidanteil schränkt darüber hinaus wegen der Kontaminationsgefahr
die Einsatzmöglichkeiten von auf diese Art und Weise erhältlichen Formkörpern in der Halbleitertechnologie und
insbesondere in der Siliciumtechnologie ein.

Ausgehend von diesem Stand der Technik war es Aufgabe der
Erfindung, einen als Grundmaterial für vielerlei Arten von
Formkörpern geeigneten Werkstoff auf der Basis von elementarem Silicium bereitzustellen, der sich nach einem demgegenüber einfacheren Verfahren erhalten läßt und einen geringeren Siliciumcarbidgehalt aufweist.

Gelöst wird die Aufgabe durch einen Werkstoff, der erhältlich ist  nach einem Verfahren, welches dadurch gekennzeichnet ist, daß zunächst eine Mischung aus elementares
Silicium enthaltenden Partikeln und elementarem Kohlenstoff
und/oder einer oder mehreren, bei der Arbeitstemperatur
carbonisierbaren Substanzen bereitet wird, daß aus dieser
Mischung in einem ersten Formgebungsschritt ein Grünkörper
gebildet wird  und daß der Grünkörper in oxidierender oder inerten Atmosphäre auf eine Temperatur von 1000 - 1400°C gebracht wird, wobei die Aufheiz- und Verweilzeiten mit der ursprünglichen Einwaage des Kohlenstoffs bzw. der carbonisierbaren Substanz(en) in der Mischung so abgestimmt werden, daß im Endprodukt ein Kohlenstoffanteil von bis zu 2 Gew.-%, bezogen auf vorgelegtes Silicium, gebunden wird.

Elementares Silicium enthaltende Partikel, die für die Durchführung des erfindungsgemäßen Verfahrens geeignet sind, können in ihrem Siliciumgehalt innerhalb eines weiten Bereiches variieren. So lassen sich beispielsweise gleichermaßen Partikel aus reinem oder reinstem Silicium mit Siliciumanteilen von über 99.99 Gew.-%, technischem Silicium mit ca. 96 Gew.-% Siliciumanteil, aber auch aus siliciumhaltigen Legierungen, beispielsweise den verschiedenen Ferrosilicium- oder Calciumsiliciumsorten, und sogar aus siliciumarmen Legierungen, einsetzen. Dabei ist jedoch zu beachten, daß der Schmelzpunkt oberhalb der für die Temperaturbehandlung vorgesehenen Endtemperatur liegt. Selbstverständlich eignen sich außer den hier beispielhaft genannten auch andere Materialien, die elementares Silicium in reiner oder legierter Form enthalten. In den meisten Fällen empfiehlt es sich jedoch, Silicium enthaltende Partikel mit einem Mindestsiliciumgehalt von etwa 40 Gew.-% einzusetzen, um eine zuverlässige Reaktionsbindung der Partikel zu gewährleisten. Ansonsten wird zweckmäßig die Reinheit des Ausgangsmaterials den durch den beabsichtigten Verwendungszweck vorgegebenen Reinheitsanforderungen angepaßt.

Auch die mittlere Korngröße der elementares Silicium enthaltenden Partikel kann innerhalb weiter Grenzen variiert
werden. Unter "mittlerer Korngröße" ist dabei zu verstehen,
daß 50 Gew.-% der Partikel im Vergleich zum angegebenen
Wert eine kleinere oder gleiche, und 50 Gew.-% eine größere
oder gleiche Korngröße aufweisen, so daß grundsätzlich
also auch wesentlich größere oder kleinere Teilchen vorliegen können. Im allgemeinen haben sich Partikelmischungen
zwischen 1 und 1000 µm mittlerer Korngröße als zweckmäßig
erwiesen, obwohl grundsätzlich auch der Einsatz feinerer
oder gröberer Mischungen nicht ausgeschlossen ist. Solche
sehr feinen Siliciumpulver sind jedoch in der Regel unangenehm handhabbar, während die gröberen Pulver oft ein Produkt
ergeben, das in seiner mechanischen Stabilität zu wünschen
läßt.

Von wesentlicher Bedeutung ist auch die durch Körnung und/oder
Verdichtung beeinflußbare Dichte des aus elementares Silicium
enthaltenden Partikeln bestehenden Pulvers. Während eine hohe
Dichte von beispielsweise 60 - 80 % der theoretischen Dichte
der Ausgangssubstanz in der Regel ein kompaktes und dichtes Endprodukt ergibt, erhält man bei Einsatz von Materialien mit einer
Dichte von z.B. 30 - 50 % der theoretischen Dichte der Ausgangssubstanz zumeist ein verhältnismäßig poröses Endprodukt.

Die gewünschten mittleren Korngrößen der elementares Silicium enthaltenden Partikel, insbesondere 1 - 100 µm, lassen
sich nötigenfalls durch geeignete mechanische Behandlung der
Ausgangsmaterialien herstellen, beispielsweise durch Zermahlen grobkörnigen Rohsiliciums in Kugel- oder Schwingmühlen. Durch den Einsatz von Prall- oder Luftstrahlmühlen kann, insbesondere bei Verwendung von Substanzen hoher Reinheit, die Gefahr von Verunreinigungen gering gehalten werden.

Geeignete Kornfraktionen fallen auch beispielsweise beim Zerkleinern des für die Silanherstellung im Wirbelschichtverfahren verwendeten stückigen Rohsiliciums als sogenanntes "Unterkorn" an, eine für den Einsatz in der Wirbelschicht zu feine Kornfraktion, die bisher unter großem Aufwand erneut verschmolzen werden muß, ehe eine Wiederverwendung möglich ist. Weiterhin ist auch der Einsatz des Sägeschlamms denkbar, der beim Zersägen von Siliciumstäben oder -blöcken in Scheiben in großer Menge anfällt. Gegebenenfalls kann die mittlere Korngröße derartiger sehr feiner Partikelmischungen durch den Zusatz gröberer Partikel oder Partikelmischungen erhöht werden.

Den für die Reaktionsbindung vorgesehenen, elementares Silicium enthaltenden Partikeln können auch Füllstoffe zugesetzt werden. Dafür eignen sich grundsätzlich Stoffe, die die eigentliche, erhöhte Temperatur erfordernde Bindungsreaktion nicht ungünstig beeinflussen, beispielsweise durch Schmelzen oder Zersetzung. Geeignete Füllstoffe sind also z. B. Oxide , wie Quarz, Korund, Rutil, Anatas, Zirkon u. dgl., Mischoxide, wie z. B. Ferrite oder Titanate, aber auch Hartstoffe, wie z. B. Titancarbid, Wolframcarbid, Siliciumcarbid, Borcarbid, Bornitrid, Siliciumnitrid oder ähnliche Stoffe. Auch Metallpulver, wie etwa Eisen-, Kobalt- oder Nickelpulver kommen als Füllstoffe in Frage. Selbstverständlich können auch Füllstoffmischungen eingesetzt werden.

Der geeignete Bereich der Körnung der jeweils zugesetzten Füllstoffe entspricht grundsätzlich dem der vorgelegten elementares Silicium enthaltenden Partikel. Es ist jedoch nicht unbedingt nötig, beide Komponenten mit gleicher oder annähernd gleicher mittlerer Korngröße einzusetzen; man kann auch beispielsweise feinen, Silicium enthaltenden Partikeln grobe Füllstoffe zusetzen und umgekehrt.

Der Anteil der Füllstoffe an der vorgelegten Gesamtmenge kann innerhalb weiter Grenzen variiert werden und bisweilen sogar über 50 Gew.-%, bezogen auf das vorgelegte, elementares Silicium enthaltende Material betragen, ohne die Reaktionsbindung zu beeinträchtigen. Damit besteht die Möglichkeit, beispielsweise mechanische, thermische oder elektrische Eigenschaften dem jeweils beabsichtigten Verwendungszweck des durch die Reaktionsbindung erhältlichen Werkstoffes anzupassen. So läßt sich beispielsweise durch Zusatz von hochtemperaturbeständigen Materialien wie Siliciumcarbid oder Korund die ohnehin beträchtliche Hochtemperaturbeständigkeit des Materials weiter verbessern, während z. B. durch Zusatz von Metallpulvern die elektrische und Wärmeleitfähigkeit beeinflußt werden kann. Somit steht dem Fachmann im Rahmen des Erfindungsgedankens neben den hier nur beispielhaft genannten eine Vielzahl von weiteren, hier nicht explizit aufgeführten Möglichkeiten zur Verfügung, durch Variation der Ausgangsmaterialien und ihrer Parameter zu Werkstoffen mit den gewünschten Eigenschaften zu gelangen. Der Einfachheit halber werden im folgenden Mischungen solcher geeigneter Ausgangsmaterialien als "Siliciumpartikel" bezeichnet.

Um diese Siliciumpartikel einer Reaktionsbindung in Gegenwart von Kohlenstoff unterwerfen zu können, werden sie zunächst mit elementarem Kohlenstoff und/oder einer oder
mehreren, bei der Arbeitstemperatur carbonisierbaren Substanzen vermischt. Dies kann beispielsweise dadurch geschehen,
daß die Siliciumpartikel mechanisch mit Kohlenstoff, z.B. Graphitpulver oder Kohlestaub, günstig in einer mittleren Korngröße von 1 - 100 µm, und/oder mit Granulaten oder Pulvern
von carbonisierbaren Polymeren, z.B. von Thermoplasten wie
Polyethylen oder Polystyrol, vorzugsweise aber Kunstharzen
wie z.B. Epoxid-, Phenol- oder Polyurethanharzen, vermengt
werden, wofür z.B. Mischen von Hand oder die üblichen, für
die Herstellung von Fest-Fest-Mischungen gebräuchlichen Mischvorrichtungen infrage kommen. Andere geeignete carbonisierbare
Festsubstanzen sind beispielsweise manche Wachse oder Kohlenhydrate. Bei Produkten, die hohe Reinheit erfordern, ist der
Einsatz von siliciumorganischen Verbindungen oder auch
gasförmigen carbonisierbaren Substanzen denkbar.
Bisweilen ist es auch möglich, die carbonisierbaren Substanzen den Siliciumpartikeln in flüssiger Form beizumischen,
beispielsweise als Öle, Flüssigharze, oder auch als Lösungen, beispielsweise von Kohlenhydraten in Wasser. Selbstverständlich können auch mehrere carbonisierbare Substanzen nebeneinander eingesetzt werden. Besonders bewährt hat es sich,
die carbonisierbaren Substanzen durch Sprühtrocknung, beispielsweise einer wäßrigen Lösung von Polyvinylalkohol, auf
die Siliciumpartikel aufzubringen.

Die Menge der den Siliciumpartikeln beigemischten carbonisierbaren Substanz(en) richtet sich nach den Bedingungen,
unter denen die eigentliche Bindungsreaktion stattfindet. So
ist bei gegenüber den eingesetzten Substanzen oxidierender Arbeitsatmosphäre stets mit Verlusten durch Abbrand zu rechnen,
die mit steigender Aufheiz- und Verweilzeit immer größer werden. Bei inerter Arbeitsatmosphäre sind diese Verluste geringer, so daß der Kohlenstoffgehalt des Endproduktes in vielen
Fällen etwa dem Kohlenstoffgehalt der ursprünglichen Einwaage der carbonisierbaren Substanz(en) und/oder des Kohlenstoffs entspricht. Grundsätzlich wird man den Anfangsgehalt

0180924

an Kohlenstoff so wählen, daß im Endprodukt ein Kohlenstoffanteil von bis zu 2 Gew.-%, bezogen auf den vorgelegten Anteil an elementarem Silicium, gebunden wird. In der Regel erfordert dies bei oxidierender Arbeitsatmosphäre einen Kohlenstoffanteil von 0,5 - 10 Gew.-%, bezogen auf vorgelegtes Silicium, in der Ausgangsmischung, wobei jedoch lange Aufheiz-
und Verweilzeiten auch höhere Kohlenstoffanteile erforderlich
machen können.

Bei inerter Arbeitsatmosphäre ist hingegen zumeist ein anfänglicher Kohlenstoffanteil von bis zu 1 Gew.-%, bezogen auf
vorgelegtes Silicium, d.h. ein annähernd dem der gewünschten
Reaktionsbindung im Endprodukt entsprechender Kohlenstoffwert ausreichend. Bisweilen kann jedoch auch ein höherer
anfänglicher Kohlenstoffgehalt gewählt werden, beispielsweise
um eine leichter handhabbare Ausgangsmischung zu erhalten,
wobei bei der Wärmebehandlung sich der nicht für die Bindungsreaktion benötigte Kohlenstoff in Form flüchtiger Verbindungen entfernen läßt.

Allgemein ist bei Pulvern mit grober Körnung der elementares
Silicium enthaltenden Partikel, bei denen die Anzahl der Kontaktflächen der Partikel untereinander gering ist, ein geringerer Kohlenstoffanteil für eine Reaktionsbindung ausreichend
als bei Pulvern mit feinkörnigen Anteilen, welche dementsprechend mehr zu bindende Kontaktflächen untereinander besitzen.

Mit der solcherart zusammengesetzten und homogenisierten
Mischung der verschiedenen Komponenten, d.h. der elementares Silicium enthaltenden Partikel, gegebenenfalls der Füllstoffe sowie des Kohlenstoffs und/oder der carbonisierbaren
Substanz(en) wird nunmehr durch einen ersten Formgebungsschritt ein Grünkörper gebildet. Dessen Form kann dabei bereits annähernd oder genau dem gewünschten Endprodukt entsprechen, sie kann aber auch so gewählt werden, daß erst
durch weitere, nachfolgende formgebende Bearbeitung die gewünschte Endform erreicht wird.

Der Grünkörper kann beispielsweise dadurch gebildet werden,
daß die vorbereitete Mischung in eine Form, beispielsweise
eine Hohlform, eingefüllt wird, wo sie zur Weiterverarbeitung, z.B. der anschließenden Temperaturbehandlung, verbleiben kann, oder aber, bei genügend stabiler Konsistenz, auch
wieder entnommen und ohne umhüllende Formteile weiterverarbeitet werden kann. Bei flachen, flächigen Endprodukten ist
es oftmals ausreichend, die Mischung über geeignete Unterlagen, z.B. Metall- oder Keramikplatten, zu verteilen. In
vielen Fällen, insbesondere beim Einsatz thermoplastischer
Kunststoffe oder Wachse, ist es auch hilfreich, die Mischung
während des Formgebungsschrittes zur Erweichung der carbonisierbaren Komponente zu erwärmen und nach beendeter Formgebung wieder abzukühlen, da die auf diese Weise erhältlichen
Grünkörper in der Regel besonders formstabil sind. Eine außerordentlich wirksame Methode ist die Formgebung unter Druckeinwirkung durch Verpressen der Mischung in die vorgesehene
Form, gegebenenfalls auch unter Temperaturerhöhung. Dabei kann
durch erhöhten Preßdruck, der in der Regel mindestens 20 bar
beträgt, auch die Dichte und Formfestigkeit des Grünkörpers
gesteigert werden. In diesem Zusammenhang sei beispielhaft
auf die bekannten Methoden des kalt-isostatischen Pressens
bzw. des Heißpressens oder heiß-isostatischen Pressens verwiesen. Bei geeigneter Konsistenz der Ausgangsmischung sind
auch Formgebungsverfahren wie z.B. Gießen, Drehen oder
Strangpressen möglich.

Zur eigentlichen Reaktionsbindung wird der Grünkörper auf
eine Temperatur von 1000 - 1400 °C gebracht. Dabei kann sowohl in gegenüber den Reaktanten oxidierender als auch inerter Atmosphäre gearbeitet werden. In der Regel wird man
bei Produkten, bei denen die Anwesenheit von Sauerstoff nicht
stört, die Reaktionsbindung in oxidierender Atmosphäre, insbesondere an Luft, durchführen, da diese Arbeitsweise apparativ am wenigsten aufwendig ist. Wie bereits ausge-

- 10 -

führt, ist in diesem Fall der bisweilen beträchtliche Abbrand
durch erhöhte Einwaage der flüchtigen Reaktanten bzw. entsprechend verkürzte Aufheiz- und Verweilzeiten zu berücksichtigen. Ansonsten wird die Reaktionsbindung zweckmäßig in
gegenüber den Reaktanten inerter Atmosphäre durchgeführt,
beispielsweise in Anwesenheit von Edelgasen, z. B. Argon,
aber auch Kohlendioxidgas oder Wasserstoff. Selbst der Einsatz von vermindertem Druck oder Vakuum ist denkbar. Bei
Verwendung einer Stickstoff-Atmosphäre ist auch die Möglichkeit der Nitridbildung zu berücksichtigen.

Da die Grünkörper meist eine hohe Temperaturschockresistenz
besitzen, ist es grundsätzlich sogar möglich, sie übergangslos von Raumtemperatur auf die jeweils gewählte Endtemperatur
im Bereich von 1000 - 1400°C zu bringen, beispielsweise indem
man sie in einen auf der betreffenden Temperatur gehaltenen
Ofen einbringt. Im allgemeinen wird jedoch die Temperatur
allmählich, zweckmäßig innerhalb von 10 - 120 min., bis zum
gewünschten Wert gesteigert. Auch für die Zeitdauer, während
welcher der Grünkörper auf dieser Temperatur gehalten wird,
hat sich ein Wert von 10 - 120 min. als günstig erwiesen;
kürzere oder längere Zeiten sind jedoch nicht ausgeschlossen. Da das Reaktionsbindungsverhalten stark durch die in
der Reaktionsmischung vorhandenen Komponenten beeinflußt
wird, empfiehlt es sich, die jeweils günstigsten Aufheiz-
und Verweilzeiten sowie die Endtemperatur von Fall zu Fall
empirisch durch Vorversuche zu optimieren.

Für die Erzeugung der für die Reaktionsbindung erforderlichen
Temperaturen kommen jeweils nach Maßgabe der gewählten Arbeitsatmosphäre beispielsweise die von anderen keramischen Verfahren her bekannten Vorrichtung infrage, in welchen
Formkörper hohen Temperaturen unterworfen werden, also
z. B. durch Widerstands-, Strahlungs- oder Flammenheizung
beheizte, offene oder geschlossene Öfen. Die gleichfalls
geeignete Methode des heiß-isostatischen Pressens hat zwar
den Vorteil, daß Formgebungs- und Temperaturbehandlungsschritt zu einem einzigen Vorgang zusammengefaßt werden
können, jedoch sind bei diesem Verfahren die Formgebungsmöglichkeiten beschränkt.

Wegen der ausgezeichneten Temperaturschockbeständigkeit des
erhaltenen reaktionsgebundenen Materials kann die an die
Temperaturbehandlung sich anschließende Abkühlung ohne besondere Vorsichtsmaßnahmen vorgenommen werden.

Die nach beendeter Temperaturbehandlung erhaltenen Formkörper sind in der Regel mechanisch bereits äußerst stabil,
aber zumeist nicht kompakt, sondern weisen eine gewisse
Porosität auf. Der analytisch nachweisbare Gehalt an gebundenem Kohlenstoff zeigt, daß für eine zuverlässige Reaktionsbindung in den meisten Fällen Werte um etwa 1 Gew.-%, bezogen
auf den eingesetzten Anteil an elementarem Silicium, ausreichend sind. Bei grundsätzlich möglichen Kohlenstoffgehalten
oberhalb von etwa 2 Gew.-% kann im allgemeinen bei den Formkörpern keine erhebliche Verbesserung der mechanischen Eigenschaften mehr festgestellt werden. In vielen Fällen konnte
röntgenographisch ein Kohlenstoffgehalt in Form von Siliciumcarbidspuren nachgewiesen werden. Andererseits ist es durchaus möglich, nach dem erfindungsgemäßen Verfahren stabile
Formkörper aus Materialien herzustellen, deren Siliciumcarbidgehalt unterhalb der röntgenographischen Nachweisgrenze liegt,
die bei etwa 0,01 Gew.-%, bezogen auf vorgelegtes Silicium,
angenommen werden kann.

0180924

Nach abgeschlossener Reaktionsbindung kann das erhaltene Material, beispielsweise wenn es als Block, Platte oder Stab vorliegt, einer weiteren, formgebenden Behandlung unterzogen werden. Für die Bearbeitung eignen sich im allgemeinen die von keramischen Werkstoffen oder Graphit her bekannten Methoden, also beispielsweise Sagen, Schleifen, Drehen, Bohren, Fräsen oder andere Bearbeitungstechniken.

Nach dem zweiten formgebenden Schritt, aber auch bereits nach der Reaktionsbindung kann die Oberflächenqualität des erhaltenen Werkstoffes durch das Erzeugen von Oberflächenschichten zusätzlich beeinflußt und dem jeweiligen Verwendungszweck angepaßt werden. Eine solche Behandlung kann sowohl die äußere als auch, wegen der Porosität des Werkstoffes, seine innere Oberfläche betreffen.

Mit Hilfe der chemischen Gasphasenabscheidung (chemical vapor deposition) durch Zersetzung von flüchtigen, zersetzlichen Verbindungen wie beispielsweise Halogensilanen, Kohlenwasserstoffen oder Borhalogeniden lassen sich z.B. Schichten von Silicium, Kohlenstoff oder Bor auf die Oberfläche von erhitzten, aus dem Werkstoff gefertigten Substraten aufbringen. Schichten können auch durch Reaktion des Werkstoffes mit einer Gasphase erzeugt werden. Beispiele dafür sind die Nitridierung durch Über- oder Durchströmen mit Ammoniak oder Stickstoff bei hohen Temperaturen, die Oxidation mit feuchtem Sauerstoff oder die Carbidbildung durch Reaktion mit gasförmigen Kohlenwasserstoffen. Diese Verfahren sind dem Fachmann beispielsweise von der Oberflächenbearbeitung von polykristallinem elementarem Silicium bekannt und lassen sich sinngemäß auf Werkstoffe aus nach dem erfindungsgemäßen Verfahren reaktionsgebundenen, elementares Silicium enthaltenden Partikeln übertragen. Je nach Reaktionsführung können sich dabei die Schichten auf die äußere Oberfläche beschränken oder aber auch die innere Oberfläche mit umfassen, was letztendlich sogar bis zu einer vollständigen Reaktion, z.B. Nitridierung, des vorhandenen elementaren Siliciumanteils führen kann.

Eine weitere Möglichkeit zur Oberflächenbeschichtung des Werkstoffes besteht im Aufbringen oder Erzeugen von oberflächlichen schmelzflüssigen Phasen mit nachfolgendem Wiedererstarren. So kann der Werkstoff durch kurzzeitige Hochtemperaturbehandlung z. B. mittels Strahlungs- oder Flammenheizung oberflächlich angeschmolzen werden, wodurch eine glatte, dichte Oberflächenschicht von, je nach Zeitdauer und Intensität des Schmelzvorgangs, wenigen Mikrometern bis einigen Millimetern Dicke entsteht, die nach dem Erstarren in der Regel ausreicht, um den Werkstoff gasdicht zu machen. Gleichermaßen geeignet ist das Verfahren, den Werkstoff durch Eintauchen in eine Schmelze des vorgesehenen Stoffes, z. B. Silicium, zu beschichten oder diesen in schmelzflüssiger Form beispielsweise aufzugießen oder anderweitig über die Oberfläche zu verteilen. In diesem Zusammenhang wirkt sich die Tatsache günstig aus, daß der Werkstoff von geschmolzenem Silicium ausgezeichnet benetzt wird. Denkbar ist auch der Einsatz von Emaillierungsverfahren, z. B. durch Auftragen von Pulver- oder Naßemail. Bei allen Beschichtungsvorgängen ist jedoch zu beachten, daß unterschiedliche thermische Ausdehnung von Beschichtungs- und Substratmaterial die Bildung von Rissen oder Ausbrüchen, zumindest der Oberfläche, zur Folge haben kann.

Damit kommt der erfindungsgemäße Werkstoff aufgrund der vielfältigen Variationsmöglichkeiten bezüglich Ausgangsstoffen, Bedingungen der Reaktionsbindung, Formgebung und Nachbehandlung auch für zahlreiche Anwendungen infrage. Beispielsweise kann er bei Beschichtung mit Reinstsilicium in vielen Fällen das bisher eingesetzte, polykristalline Reinstsilicium ergänzen oder ersetzen, z. B. als Träger-

- 14 -

körper bei der Siliciumabscheidung oder als Werkstoff für Reaktionsräume bei Hochtemperaturprozessen in der Halbleitertechnik. Gleichermaßen kann der Werkstoff als hochfeuerfestes und chemisch resistentes Material beispielsweise als Wärmeisolierstoff, zur Auskleidung von Öfen, Tiegeln oder Gießformen oder auch als Ausgangsmaterial für die Anfertigung von Tiegeln und dgl. verwendet werden. Die Porosität des Materials gestattet auch seinen Einsatz als Filtermaterial. Ein besonderer Vorteil des Werkstoffes liegt darin, daß er gegenüber chemischen Angriffen mit Säuren oder Laugen weitgehend inert ist. Aus ihm gefertigte Formkörper können im allgemeinen also durch Säure- oder Laugenbehandlung gereinigt werden.

Schließlich lassen sich nach dem erfindungsgemäßen Reaktionsbindungsverfahren auch Formteile aus elementares Silicium enthaltendem Material miteinander verbinden, indem die Kontaktflächen mit einer Mischung aus elementares Silicium enthaltenden, vorzugsweise sehr feinkörnigen Partikeln und Kohlenstoff und/oder einer oder mehrerer carbonisierbarer Substanzen bestrichen und danach wieder in Kontakt gebracht und gehalten werden. Bei Temperaturerhöhung auf 1000 - 1400 °C werden die Flächen fest miteinander verbunden, so daß eine insbesondere gegenüber chemischen Angriffen sehr stabile Verbindung der Formteile entsteht.

Der erfindungsgemäße Werkstoff bietet damit die Möglichkeit, ausgehend von elementares Silicium enthaltenden Partikeln Formkörper unterschiedlichster Art für vielseitige Verwendungszwecke herzustellen. Dies zeigen auch die nachstehenden Beispiele, die den Erfindungsgedanken näher, aber nicht im Sinne einer Beschränkung, erläutern.

Beispiel 1

Verschiedene elementares Silicium enthaltende Partikel der
nachstehend angegebenen Zusammensetzung und mittleren Korngröße wurden, ggf. unter Zusatz von Füllstoffen, mit der
nachstehend angegebenen Menge carbonisierbarer Substanzen
sorgfältig vermischt und, ggf. unter Vorbereitung durch
leichtes Erwärmen, in eine keramische zylindrische Hohlform
von 2,5 cm Höhe und 2 cm Durchmesser eingefüllt. Diese Hohlform wurde dann unter der jeweils angegebenen Arbeitsatmosphäre innerhalb etwa 1 Stunde auf die angegebene Temperatur gebracht und für etwa 20 Minuten dort gehalten. Während der
Temperaturbehandlung wurde unter teilweisem Abdampfen flüchtiger Verbindungen die organische Substanz carbonisiert und
bewirkte eine Reaktionsbindung der elementares Silicium enthaltenden Partikel.

Anschließend wurde die Hohlform wieder auf Raumtemperatur
abgekühlt und der erhaltene reaktionsgebundene Formkörper
entnommen. Eine Analyse des Kohlenstoffgehaltes ergab, daß
durch die Bindungsreaktion die nachstehend aufgeführten Kohlenstoffanteile gebunden worden waren.

Die den einzelnen Ansätzen entsprechenden Zahlenangaben sind
in der Tabelle 1 zusammengestellt.

Tabelle 1

| An-satz | Elementares Silicium enthaltende Partikel | | | Füllstoff | | | Carbonis. Substanz | | Wärmebehandlung | | | Gebund. C-Anteil (Gew.-%) |
|---|---|---|---|---|---|---|---|---|---|---|---|---|
| | Sorte | Si-Anteil (Gew.-%) | MK | Art | MK | $\frac{FS}{M}$ | Art | $\frac{CS}{Si}$ | Vorber. temp. (°C) | End-temp. (°C) | Atmosphare | |
| 1 | Reinst-Si | 99,9999 | 5 | – | – | – | PVAl | 2 | – | 1350 | Argon | < 0,1 |
| 2 | Roh-Si | 98 | 50 | – | – | – | PH | 3 | 200 | 1200 | Luft | 1,0 |
| 3 | Roh-Si | 98 | 20 | SiC | 2 | 25 | PH | 6 | 200 | 1300 | Luft | 1,0 |
| 4 | Roh-Si | 98 | 50 | $Al_2O_3$ | 50 | 50 | PVAl | 1 | – | 1350 | $N_2$ | 0,1 |
| 5 | Rein-Si | 99,99 | 10 | – | – | – | PS | 2 | – | 1200 | Luft | < 0,1 |
| 6 | Rein-Si | 99,99 | 200 | – | – | – | PH | 1 | 160 | 1100 | Luft | < 0,1 |
| 7 | FeSi | 45 | 40 | – | – | – | PH | 1,5 | 200 | 1200 | Luft | 0,2 |
| 8 | Reinst-Si | 99,9999 | 10 | – | – | – | SH | 4 | – | 1250 | Luft | < 0,1 |

Die in der Tabelle verwendeten Abkürzungen haben folgende Bedeutung:

MK: Mittlere Korngröße (μm)

$\frac{FS}{M}$ Anteil des Füllstoffes an der Gesamtmenge (Gew.-%)

$\frac{CS}{Si}$ Anteil der carbonisierbaren Substanz, bezogen auf vorgelegtes Silicium (Gew.-%)

PVAl Polyvinylalkohol

PH Phenolharz

PS Polysaccharid

SH Silikonharz

Beispiel 2

Aus dem beim Läpptrennen von Reinstsiliciumblöcken anfallenden Sägeschlamm, einem Gemisch, welches durchschnittlich auf
10 Gewichtsteile Reinstsiliciumpulver einer mittleren Korngröße von etwa 2 µm zusätzlich etwa 5 Gewichtsteile des Läppkorns Siliciumcarbid (mittlere Korngröße etwa 10 µm) und
etwa 1 Gewichtsteil des Abriebs von den Stahlklingen (mittlere Korngröße etwa 1 µm) sowie ca. 3 Gew.-% Läppöl enthält,
wurde eine homogene Mischung hergestellt.

Diese Mischung wurde dann in Plattenform gepresst (100 x 100 x
5 mm³) und anschließend an Luft in einen Tiegelofen gestellt,
der auf einer Temperatur von etwa 1300 °C gehalten war. Nach
etwa 20 Minuten wurde die Platte entnommen und abkühlen gelassen. Die erhaltene, stabile, feinporige Platte hatte während
der Reaktionsbindung einen Kohlenstoffanteil von etwa 1 Gew.-%
gebunden; der restliche Kohlenstoffanteil aus den vorgelegten
carbonisierbaren Substanzen war in Form flüchtiger Verbindungen und/oder durch Abbrand aus dem Gemisch entwichen.

Beispiel 3

Dem beim Diamantsägen von Reinstsilicium anfallenden Sägeschlamm, einer Mischung aus Reinstsiliciumpartikeln einer
mittleren Korngröße von etwa 2 µm (ca. 100 Gewichtsteile) und
dem Abrieb der Diamantsäge sowie Verunreinigungen aus der
Schneidunterlage (insgesamt etwa 3 Gewichtsteile, mittlere
Korngröße etwa 2 µm), wurde nach dem Sprühtrocknungsverfahren eine wäßrige Lösung von Polyvinylalkohol zugefügt. Die
erhaltene Mischung (Polyvinylalkoholanteil ca. 4 Gew.-%)
wurde dann analog dem in Beispiel 2 beschriebenen Verfahren
in Plattenform gepresst und erhitzt.

In dem erhaltenen, stabilen, feinporigen Formkörper konnte
ein Kohlenstoffanteil von etwa 0,5 Gew.-% nachgewiesen werden.

- 18 -

0180924

## Beispiel 4

1,8 kg eines Siliciumpulvers technischer Reinheit der mittleren Korngröße 30 µm (Abfallprodukt aus der Siliciumzerkleinerung) wurde mit 4 Gew.-% Industrieruß gleichmäßig vermischt. Dieses Gemisch wurde in eine Preßform gebracht und 1 Sekunde lang mit ca. 200 bar Druck verdichtet. Nach dem Ausformen wurde der massive Körper in einem elektrisch beheizten Ofen an Luft innerhalb von etwa 20 Minuten auf ca. 1200 °C erhitzt. Nach einer Verweilzeit von etwa 1 Stunde konnte eine kompakte hochtemperaturbeständige Formplatte mit den Abmessungen $30 \times 20 \times 2\ cm^3$ entnommen werden. Der gebundene Kohlenstoffanteil betrug etwa 1 Gew.-%.

## Beispiel 5

50 kg eines Reinstsiliciumpulvers der mittleren Korngröße 20 µm wurden mit Phenolharz (Mischungsanteil ca. 4 Gew.-%) homogen vermischt. Aus dieser Mischung wurden in einer isostatischen Presse bei etwa 200 bar 2 Tiegel gepreßt und anschließend bei 1350 °C unter Stickstoffatmosphäre geglüht. Ein grauschwarzer Tiegel wurde nach ca. 20 Minuten entnommen; sein Kohlenstoffgehalt betrug etwa 1 Gew.-%. Der zweite Tiegel wurde nach 5 Stunden entnommen. In seinem hellgrauen Oberflächenbereich konnte neben einem gebundenen Kohlenstoffanteil von etwa 1 Gew.-% auch ein Stickstoffanteil von etwa 5 Gew.-% nachgewiesen werden.

## Beispiel 6

100 g Reinsiliciumpulver (99,99 Gew.-% Siliciumanteil) der mittleren Korngröße 60 µm wurden mit ca. 4,5 g Kunstharz homogen vermischt, in einer Presse bei ca. 60 bar in eine Rohrform gepreßt und dann bei ca. 1350 °C unter Argonatmosphäre geglüht. Das erhaltene Rohr (gebundener Kohlenstoffanteil ca. 0,5 Gew.-%) wurde in eine Siliciumschmelze eingetaucht und konnte dadurch mit einer gasdichten Oberflächenschicht aus Silicium überzogen werden.

Beispiel 7

Eine Plattenform aus gasdurchlässiger Keramik wird mit Reinstsiliciumpulver (Siliciumgehalt 99,9999 Gew.-%, mittlere Korngröße 25 μm) gefüllt. Nach Verdichten des Füllgutes durch Einrütteln wird die Form auf 1200 °C erhitzt, wobei eine leicht strömende Atmosphäre aus Argon mit etwa 10 Vol.-% Ethananteil eingestellt wird. Nach etwa 20 Minuten Reaktionszeit wird eine stabile Platte der Maße 100 x 100 x 5 mm³ mit einem gebundenen Kohlenstoffanteil von etwa 0,3 Gew.-% erhalten.

Beispiel 8

Zwei Rohre aus polykristallinem Silicium (Länge 500 mm, Durchmesser 100 mm, Wandstärke 6 mm) wurden an den Stirnflächen plangeschliffen. Auf diese wurde dann eine aus feinem Reinstsiliciumpulver (mittlere Korngröße 2 μm) und wäßrigem Polyvinylalkohol (ca. 10 Gew.-% Polyvinylalkoholanteil) im Mengenverhältnis von etwa 2 : 1 angerührte Paste dünn aufgetragen. Dann wurden die so vorbereiteten Rohre an den Stirnflächen zusammengepreßt und diese Zone mittels eines Rohrofens (Argonatmosphäre) für ca. 30 Minuten auf etwa 1350 °C erhitzt. Danach waren die beiden Rohre fest miteinander verbunden.

Beispiel 9

Aus Reinstsiliciumpulver (99,99 Gew.-% Siliciumgehalt, mittlere Korngröße 25 μm), welchem durch Sprühtrocknung etwa 2 Gew.-% eines Polysaccharides zugefügt worden waren, wurden quadratische, flache Scheiben (100 x 100 x 1 mm³) geformt und in einem Durchlaufofen unter Argonatmosphäre bei 1350 °C reaktionsgebunden.

0.1.80924

Die erhaltenen Scheiben wurden dann kurz in eine auf ca.
1430 °C gehaltene Reinstsiliciumschmelze eingetaucht und erhielten dadurch einen rißfreien, gleichmäßigen grobkristallinen Überzug aus Reinstsilicium.

Die so beschichteten Scheiben eignen sich für die Weiterverarbeitung zu Solarzellen.

- 1 -

Patentansprüche

1. Verfahren zur Herstellung eines Werkstoffes aus elementares Silicium enthaltenden Partikeln durch Reaktionsbindung in Gegenwart von Kohlenstoff, dadurch gekennzeichnet, daß zunächst eine Mischung aus elementares Silicium enthaltenden Partikeln und elementarem Kohlenstoff und/oder einer oder mehreren, bei der Arbeitstemperatur carbonisierbaren Substanzen bereitet wird, daß aus dieser Mischung in einem ersten Formgebungsschritt ein Grünkörper gebildet wird, und daß der Grünkörper in oxidierender oder inerter Atmosphäre auf eine Temperatur von 1000 - 1400 °C gebracht wird, wobei die Aufheiz- und Verweilzeiten mit der ursprünglichen Einwaage des Kohlenstoffs bzw. der carbonisierbaren Substanz(en) in der Mischung so abgestimmt werden, daß im Endprodukt ein Kohlenstoffgehalt von bis zu 2 Gew.-%, bezogen auf vorgelegtes Silicium, gebunden wird.

2. Verfahren nach Anspruch 1, dadurch gekennzeichnet, daß elementares Silicium enthaltende Partikel mit einer mittleren Korngröße von 1 bis 1000 µm eingesetzt werden.

3. Verfahren nach den Ansprüchen 1 oder 2, dadurch gekennzeichnet, daß den elementares Silicium enthaltenden Partikeln Füllstoffe beigemischt werden.

4. Verfahren nach einem oder mehreren der Ansprüche 1 bis 3, dadurch gekennzeichnet, daß ein Grünkörper mit 0,5 bis 10 Gew.-% Kohlenstoffgehalt, bezogen auf vorgelegtes Silicium, geformt wird.

5. Verfahren nach einem oder mehreren der Ansprüche 1 bis 4, dadurch gekennzeichnet, daß der Formgebungsschritt unter Druckeinwirkung durchgeführt wird.

6. Verfahren nach einem oder mehreren der Ansprüche 1 bis 5, d a d u r c h    g e k e n n z e i c h n e t , daß eine Aufheizzeit bis zur gewünschten Endtemperatur von 1 bis 120 min. eingehalten wird.

7. Verfahren nach einem oder mehreren der Ansprüche 1 bis 6, d a d u r c h    g e k e n n z e i c h n e t , daß der Werkstoff mit einer Oberflächenbeschichtung versehen wird.

8. Werkstoff aus in Gegenwart von Kohlenstoff reaktionsgebundenen, elementares Silicium enthaltenden Partikeln, erhältlich nach Verfahren gemäß einem oder mehreren der Ansprüche 1 bis 7.

9. Verfahren zum Verbinden von elementares Silicium enthaltenden Formteilen, d a d u r c h    g e k e n n z e i c h n e t ,    daß auf die Kontaktflächen der zu verbindenden Formteile eine Mischung aus elementares Silicium enthaltenden Partikeln und elementarem Kohlenstoff und/oder einer oder mehreren, bei der Arbeitstemperatur carbonisierbaren Substanzen aufgebracht wird, und daß anschließend die Formteile wieder in Kontakt gebracht und einer Reaktionsbindung gemäß einem oder mehreren der Ansprüche 1 bis 7 unterworfen werden.